# EUROPÄISCHE PATENTSCHRIFT

(11) **EP 3 887 095 B1**
(45) Veröffentlichungstag und Bekanntmachung des Hinweises auf die Patenterteilung: **25.12.2024**
(21) Anmeldenummer: 19853283.0
(22) Anmeldetag: 25.11.2019
(51) Int. Cl.: B25B 5/06, B23Q 1/00

(54) **SPANNSYSTEM AUS EINER SPANNVORRICHTUNG UND EINEM KOMBIBOLZEN**
TENSIONING SYSTEM CONSISTING OF A TENSIONING DEVICE AND A COMBINATION BOLT
SYSTÈME DE SERRAGE COMPOSÉ D'UN DISPOSITIF DE SERRAGE ET D'UN BOULON COMBINÉ

(30) Priorität: 26.11.2018 DE 102018009226
(43) Veröffentlichungstag der Anmeldung: 06.10.2021
(73) Patentinhaber: Zimmer, Martin, 77866 Rheinau (DE); Zimmer, Günther, 77866 Rheinau (DE)
(72) Erfinder: Zimmer, Martin, 77866 Rheinau (DE); Zimmer, Günther, 77866 Rheinau (DE)
(74) Vertreter: Thämer, Wolfgang
(86) Internationale Anmeldenummer: PCT/DE2019/000302
(87) Internationale Veröffentlichungsnummer: WO 2020/108675

(56) Entgegenhaltungen:
- EP-A1- 1 208 937
- EP-A1- 1 321 221
- CH-A5- 691 042
- DE-A1- 102005 031 784
- DE-A1- 102016 116 281
- DE-B3- 102015 206 590
- DE-B3- 102017 114 150
- US-A1- 2017 165 801

## Beschreibung

Die Erfindung betrifft ein Spannsystem aus einer Spannvorrichtung und einem Kombibolzen nach Anspruch 1, wobei die Spannvorrichtung im Gehäuse mindestens einen Ringkolben und mindestens drei Spannelemente lagert und zudem eine automatisch verschließbare Aufnahmeausnehmung zur temporären Aufnahme des Kombibolzens aufweist, wobei der Kombibolzen zwei kegelstumpfmantelförmige Spannflächen hat, deren Oberflächen einander zugeneigt sind, wobei der Gehäusegrundkörper des Gehäuses und die Spannelemente jeweils eine kegelstumpfmantelförmige Zentrierspann- oder Hüllspannfläche aufweisen, deren Oberflächen voneinander abgewandt sind. Das Gehäuse weist einen am Gehäusegrundkörper anliegenden Gehäusedeckel auf.

Um ein Werkstück beispielsweise auf einem Maschinentisch einer Bearbeitungsmaschine wiederholgenau und effizient aufspannen zu können, kann in der Regel mindestens ein Nullpunktspannsystem eingesetzt werden. Anstelle des Werkstücks können auch Schraubstöcke, Paletten oder vergleichbare Vorrichtungen über dieses System fixiert werden.

Aus einem Prospekt der Vischer & Bolli AG, Werkzeug- und Spanntechnik aus Dübendorf in der Schweiz ist ein mit "vb Dock Lock AirLine" bezeichnetes Spannsystem aus dem September 2018 bekannt, dessen Spannvorrichtung einen kompliziert geformten Ringkolben aufweist, der mit seiner konischen Innenwandung auf in einem Trägerring gelagerte Spannsegmente wirkt, die sich beim Spannvorgang an einem in eine Aufnahmebohrung einsteckbaren Kombibolzen spannend anlegen. Die Aufnahmebohrung ist bei ungenutztem Spannsystem mit einer Verschlusskappe verschlossen.

In der DE 10 2015 206 590 B3 werden ein Spannmodul und ein Spannsystem, insbesondere ein Nullpunktspannsystem, beschrieben, bei denen ein Spannbolzen in einer Aufnahmebohrung einspannbar ist. Im Spannmodul sind dazu drei radial verfahrbar um die Mittellinie des Spannsystems angeordnete Schlitten positioniert, die über plane Keilflächen den Spannbolzen quer verschiebbar lagern.

Aus der DE 10 2016 116 282 A1 ist ein beweglicher Haltemechanismus zum Fixieren eines Werkstückträgers auf einem Spannkopf bekannt. Ein an den Werkstückträger angeordneter Kombibolzen wird zum Andocken an den Spannkopf in dessen zentrale Bohrung eingesteckt, um dort mittels einer Rasteinheit zu verrasten. Die Rasteinheit weist als Spannelemente mehrere Rastkörper auf. Die bolzenartigen Spannelemente sitzen in Bohrungen einer nach oben offenen Kugelspannbüchse, die beim Fixieren den Kombibolzen aufnimmt.

In der CH 691 042 A5 wird ein Spannsystem nach dem Oberbegriff des Anspruchs 1 zum Spannen diverser Andockeinheiten auf einer Trägerplatte beschrieben. Ein an der Andockeinheit angeordneter Kombibolzen wird zum Andocken an der Trägerplatte in deren zentrale Bohrung eingesteckt, um dort mittels einer Rasteinheit zu verrasten. Die in Form einer Hülse ausgebildete Rasteinheit weist als Spannelemente mehrere Rastkugeln auf.

Der vorliegenden Erfindung liegt die Problemstellung zugrunde, ein Spannsystem aus einer Spannvorrichtung und einem Kombibolzen zu entwickeln, dessen Baugruppen bei einem kleinen Bauraum eine hohe Verschleißfestigkeit, eine sehr gute Betriebssicherheit bei einfacher Adaptierbarkeit und eine große Einzugskraft gewährleisten.

Diese Problemstellung wird mit den Merkmalen des Patentanspruchs 1 gelöst. Dabei ist am Gehäusegrundkörper ein Stützrohr und am Gehäusedeckel ein Anschlagrohr angeformt. Die Spannelemente sind als Teile eines Spannringes in Axialrichtung zwischen der Stirnfläche des Stützrohres und der Stirnfläche des Anschlagrohres radial zustellbar angeordnet. Der Ringkolben weist - für die Verschiebbarkeit der Spannelemente - eine kegelstumpfmantelförmige Ringnutkeilfläche auf, die räumlich zwischen der oberen und unteren Kolbeninnenabdichtung liegt.

Mit der Erfindung wird ein Spannsystem zur Verfügung gestellt, bei dem die in der Spannvorrichtung angeordneten Spannelemente am Kombibolzen mit ihren Spannflächen vollflächig zur Anlage kommen. Dadurch ergeben sich auch bei hohen Einzugskräften verhältnismäßig niedrige Flächenpressungen. Die großen Kontaktflächen garantieren eine hohe Formsteifigkeit des Gesamtsystems, womit die Spannvorrichtung über den Kombibolzen auch große Lastmomente problemlos abstützen kann.

Die Spannelemente, die Teile eines über Elastomerkörper zusammenmontierten Spannrings sind, bilden mit einem Ringkolben zusammen ein Keilgetriebe, bei dem der axiale Hub des Ringkolbens radiale, auf den Spannring wirkende Spannkräfte erzeugt. Über die Elastomerkörper des Spannrings sind die segmentartigen Spannelemente in Umfangsrichtung elastisch gekoppelt. Der Ringkolben wird im Ausführungsbeispiel mittels Federkraft in die Spannstellung der Spannvorrichtung bewegt und dort gehalten. Gegebenenfalls wird der Spannvorgang mithilfe von Druckluft unterstützt. Zum Entlasten des gespannten Spannrings und zum Zurückfahren des Ringkolbens - für die Freigabe des Kombibolzens - wird Druckluft eingesetzt. Zusätzlich wird der Innenraum der Spannvorrichtung unter Sperrluft gesetzt, um während der Werkstückbearbeitung ein Eindringen von Spänen, Kühl- oder Schmiermittel zu verhindern. Gegebenenfalls kann zum Bewegen des Ringkolbens auch ein Hydrauliköl benutzt werden.

Weitere Einzelheiten der Erfindung ergeben sich aus den Unteransprüchen und der nachfolgenden Beschreibung mindestens einer schematisch dargestellten Ausführungsform.
- Figur 1:: perspektivische Ansicht eines Spannsystems;
- Figur 2:: Schnitt durch das drucklose geschlossene Spannsystem;
- Figur 3:: Schnitt durch das geschlossene Spannsystem mit druckbelastetem Ringkolbenboden;
- Figur 4:: wie Figur 3, jedoch mit ausgefahrenem Reinigungskolben;
- Figur 5:: Schnitt durch das Spannsystem mit druckbelasteter Ringkolbenfrontseite und mit teilweise eingetauchtem Kombibolzen;
- Figur 6:: wie Figur 5, jedoch mit vollständig eingetauchtem, aber unverriegeltem Kombibolzen;
- Figur 7:: wie Figur 6, jedoch mit mittels der Federspannkraft des Ringkolbens verriegeltem Kombibolzen;
- Figur 8:: Spannring von schräg oben;
- Figur 9:: Spannring von schräg unten;
- Figur 10:: Draufsicht auf den Spannring;
- Figur 11:: perspektivische Ansicht einer Verschlusskappe von schräg unten mit ausgefahrenem Reinigungskolben;
- Figur 12:: wie Figur 11, jedoch schräg von der Seite;
- Figur 13:: perspektivische Ansicht des Spannsystems von unten.

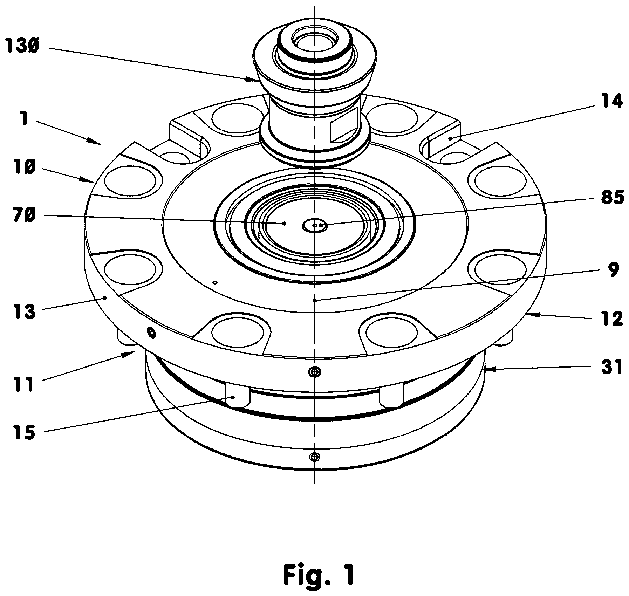

Die Figur 1 zeigt ein Spannsystem (1), das aus einer Spannvorrichtung (10) und einem Kombibolzen (130) besteht. Die Spannvorrichtung (10) ist zur Aufnahme eines Werkstücks beispielsweise in einem Maschinentisch integriert. An dem zu spannenden Werkstück ist in der Regel mindestens ein Kombibolzen (130) - über den das Werkstück am Maschinentisch adaptierbar ist - befestigt. Das Gehäuse (11) der Spannvorrichtung (10) beinhaltet eine Mechanik, die den Kombibolzen (130) wiederholgenau in der Spannvorrichtung (10) positioniert. Diese Mechanik umfasst ein Keilgetriebe (63, 111), dessen Antriebsteil ein Ringkolben (40) ist.

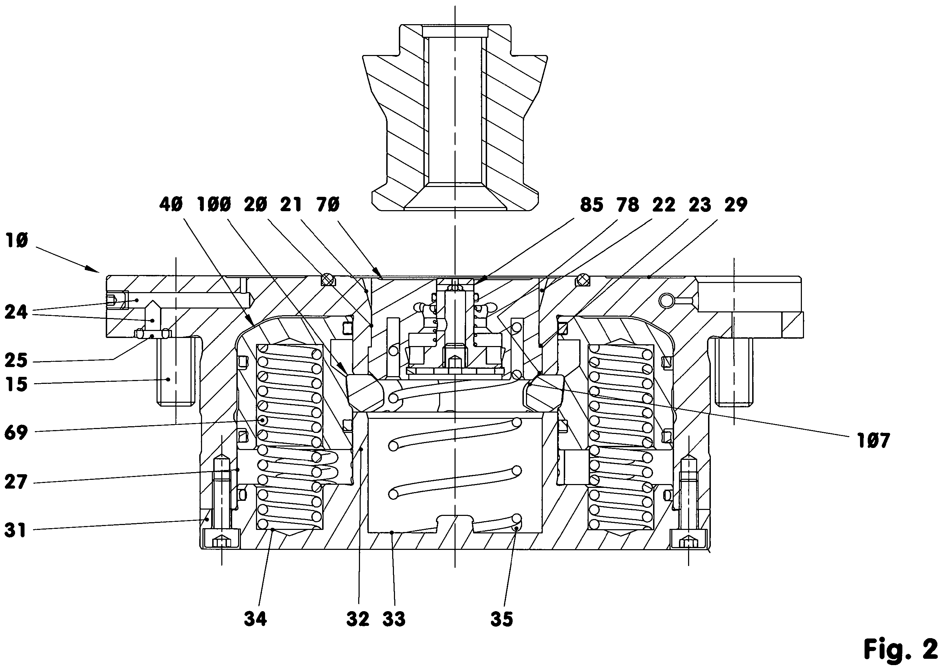

Das in Figur 2 dargestellte Gehäuse (11) besteht im Wesentlichen aus einem flanschartigen Gehäusegrundkörper (12) und einem in der Unterseite des Gehäusegrundkörpers (12) sitzenden Gehäusedeckel (31). Beide Teile sind z.B. aus dem rost-, säure- und hitzebeständigen Stahl X90CrMoV18 gefertigt.

Der einteilige, z.B. 44 mm hohe, Gehäusegrundkörper (12) setzt sich aus einer Flanschplatte (13) und einem daran angeformten Zylinder (27) zusammen. Die Flanschplatte (13) hat hier einen Durchmesser von 112 mm bei einer Wandstärke von 10 mm. Der Zylinder (27) hat einen Außendurchmesser von 86 mm bei einer maximalen Wandstärke von 6 mm. Die Flanschplatte (13) und der Zylinder (27) haben eine gemeinsame Mittellinie (9). Im Übergangsbereich zwischen dem Zylinder (27) und der Bodenseite der Flanschplatte (13) befindet sich zur Erhöhung der Formsteifigkeit des Gehäusegrundkörpers (12) eine, senkrecht zur Mittellinie (9) gemessen, z.B. 5,5 mm breite Fase (42), deren Kegelwinkel 120 Winkelgrade misst.

Die Flanschplatte (13) hat in ihrem äußeren Bereich, der über den Zylinder (27) übersteht, z.B. acht äquidistant auf dem Umfang verteilte Senkbohrungen zur Aufnahme von Befestigungsschrauben (15), über die die Spannvorrichtung (10) starr am Maschinentisch befestigt werden kann. Die Senkbohrungen sind mit Kunststoffkappen staubdicht verschlossen. Zwischen je zwei Senkbohrungen sind in der Flanschplatte (13) von außen her zwei z.B. 17 mm lange feinbearbeitete Positionierlanglöcher (14) eingearbeitet. Sie haben eine Tiefe von 5,8 mm. Das einzelne Positionierlangloch (14) dient dem Blockieren des Drehfreiheitsgrads um die Mittellinie (9) bei der Verwendung nur eines Kombibolzens (130).

Nach Figur 2 weist die Flanschplatte (13) auf der linken Seite ein Kanalsystem (24) auf, über das ggf. ein zwischen der Flanschplatte (13) und dem aufliegenden Werkstück vorhandener Staudruck zur Kontrolle einer korrekten Werkstückauflage über einen Auflagenkontrollanschluss (25) einem Messgerät zuführbar ist. Für diesen Fall hat die Flanschplatte (13) auf ihrer Oberseite eine Axialringsnut (29), die im Ausführungsbeispiel bei einem Innendurchmesser von z.B. 48 mm und einem Außendurchmesser von z.B. 74 mm eine Tiefe von 0,3 mm aufweist. Sofern das auf der Flanschplatte (13) aufliegenden Werkstück die Axialringnut (29) vollständig abdeckt, kann der in Letzterer anliegende Staudruck zur Kontrolle verwendet werden. Die Fläche der Axialringnut (29) beträgt mindestens 25 % der werkstücktragenden Oberseite der Flanschplatte (13).

Die Flanschplatte (13), auf deren Oberseite das jeweilige Werkstück aufliegt, hat im Zentrum eine zentrale Aufnahmeausnehmung (20), die von einem an der Flanschplatte (13) angeformten Stützrohr (16) ummantelt ist. Das nach innen ragende Stützrohr (16) hat bei einer Länge von 9,5 mm eine feinbearbeitete Stirnfläche. Die der Aufnahmeausnehmung (20) abgewandte Wandung des Stützrohrs (16) ist - zur Innenführung des Ringkolbens (40) - eine feinbearbeitete zylindrische Fläche.

Die Aufnahmeausnehmung (20) hat in ihrem oberen Bereich eine kegelstumpfmantelförmige Zentrierspannfläche (21), deren Kegelwinkel z.B. 30 Winkelgrade beträgt. Die Höhe der Zentrierspannfläche (21) misst z.B. 5,6 mm. Im unteren Bereich weist die Aufnahmeausnehmung (20) einen im Durchmesser um z.B. 1 mm aufgeweiteten Hintergriffsabsatz (23) auf.

Die feinbearbeitete außenliegende Innenwandung des Zylinders (27) hat im mittleren Bereich eine umlaufende Entlüftungsnut (28).

Der Gehäusedeckel (31) sitzt über die Innenwandung des Zylinders (27) zentriert und abgedichtet im Gehäusegrundkörper (12). Er weist im Zentrum ein in den Gehäusegrundkörper (12) hineinragendes Anschlagrohr (32) auf, das eine sacklochartige Verschlusskappenausnehmung (33) umgibt. Letztere hat bei einem Durchmesser von 28 mm eine Tiefe von 19,3 mm. Die Mittellinien des Anschlagrohrs (32) und der Verschlusskappenausnehmung (33) liegen auf der Mittellinie (9). Das Anschlagrohr (32) weist zumindest eine feinbearbeitete Stirnfläche auf.

Die Außenwandung des Anschlagrohres (32) hat - ebenfalls zur Innenführung des Ringkolbens (40) - eine feinbearbeitete zylindrische Außenwandung, deren Höhe 11,5 mm misst. Die an das Anschlagrohr (32) anschließende Deckelwandung hat eine Wandstärke von z.B. 10,5 mm. In diesem Bereich verfügt der Gehäusedeckel (31) über zwölf auf einem Kreis um die Mittellinie (9) angeordnete Sacklochbohrungen (34) zur Lagerung und Führung von Schraubendruckfedern (69). Die Sacklochbohrungen (34) haben bei einer Tiefe von 7,3 mm einen Durchmesser von 10,6 mm.

Bei montierter Spannvorrichtung (10) beträgt der Abstand zwischen den Stirnflächen des Stützrohrs (16) und des Anschlagrohrs (32) z.B. 6 mm. Zwischen diesen Stirnflächen ist ein Spannring (100) angeordnet.

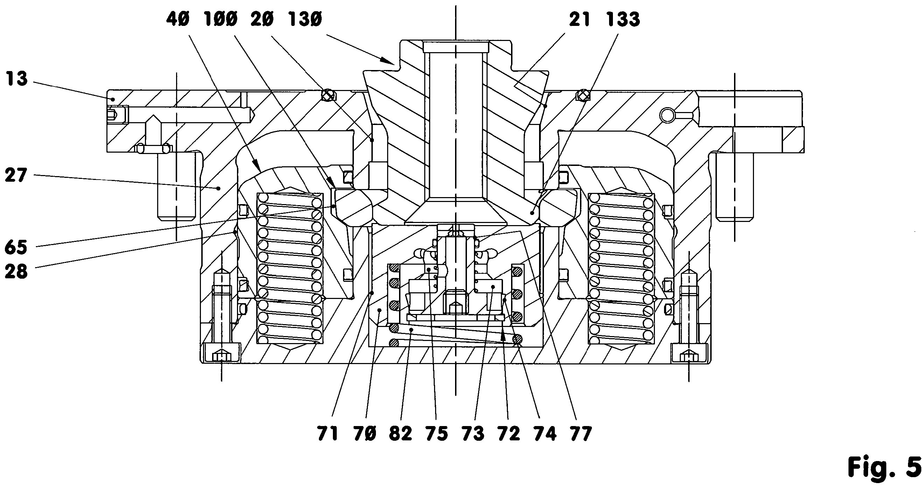

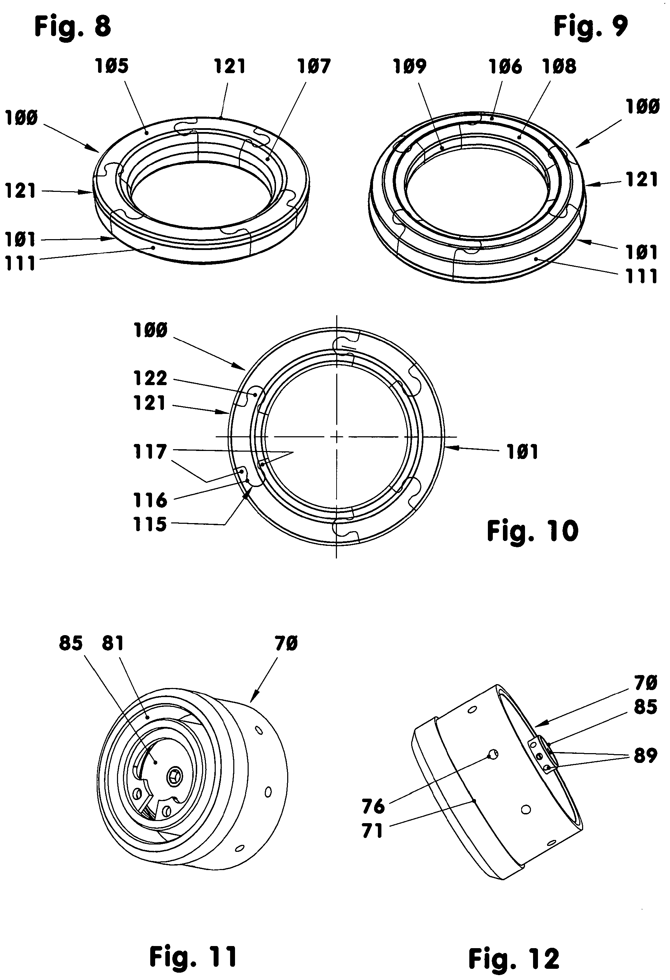

Der Spannring (100), vgl. Figuren 8 und 9, ist ein z.B. aus drei Spannelementen (101) und drei Federelementen (121) montierter Ring, dessen Querschnitt über den gesamten Spannring (100) konstant ist. Die segmentartigen Spannelemente (101) sind aus dem Stahl X90CrMoV18 gefertigt. Die Federelemente sind hier Elastomerkörper (121), die aus einem Gummi- oder einem Gummiersatzwerkstoff hergestellt sind. Die Spannelemente (101) überdecken im Spannring (100) einzeln jeweils 85 Winkelgrade, während die Elastomerkörper (121) 35 Winkelgrade überdecken. Im unverformten Zustand hat der Spannring (100) einen Innendurchmesser von 23 mm und einen Außendurchmesser von 35 mm. Seine in Axialrichtung messbare Breite ist 0,015 mm kleiner als der zwischen den Stirnflächen des Stützrohrs (16) und des Anschlagrohrs (32) gemessene Abstand. Der Innendurchmesser des Spannrings (100) kann im Bedarfsfall auf z.B. 27 mm elastisch ausgedehnt werden, vgl. Figur 5.

Gemäß Figur 5 hat der Spannring (100) einen siebeneckigen Einzelquerschnitt (102). Seine Breite und seine Höhe sind dabei zumindest nahezu identisch. Der Einzelquerschnitt (102) wird oben durch eine plane Spannfläche (105), unten durch eine plane Aufliegefläche (106), innen durch eine zylindrische Innenfläche (109) und außen durch eine kegelstumpfmantelförmige Spannringkeilfläche (111) begrenzt, vgl. auch Figuren 8 und 9. Die Spannringkeilfläche (111) hat einen Kegelwinkel von 12 Winkelgraden.

Zwischen der Innenfläche (109) und der Aufliegefläche (106) befindet sich als Fase eine kegelstumpfmantelförmige Hüllspannfläche (108), deren Kegelwinkel 120 Winkelgrade beträgt. Zwischen der obenliegenden Spannfläche (105) und der Innenfläche (109) ist eine Aufschiebekeilfläche (107) als Fase angeordnet. Ihr Kegelwinkel beträgt 90 Winkelgrade. Im äußeren Bereich geht die Aufliegefläche (106) in die Spannringkeilfläche (111) mittels der Spannringrückhubfläche (112) über. Letztere hat einen Keilwinkel von 105 Winkelgraden.

Unter Vernachlässigung der Kantenabrundungen hat die Hüllspannfläche (108) eine Fasenlänge von z.B. 2,2 mm, die Aufschiebekeilfläche (107) von z.B. 2,8 mm und die Spannringrückhubfläche (112) von z.B. 2,5 mm. Die wirksame Breite der Spannringkeilfläche (111) hat unter Berücksichtigung der Kantenabrundungen und Fasen eine wirksame Breite von 2,9 mm.

Wie die Figuren 8 und 9 zeigen, sitzt jeweils zwischen zwei Spannelementen (101) formschlüssig ein Elastomerkörper (121). Dazu hat das einzelne Spannelement (101) im Bereich seiner planen Stirnseite, vgl. Figur 10, eine Hintergriffsausnehmung (115), in die ein stirnseitiger Klemmzapfen (122) des benachbarten Elastomerkörpers (121) eingreift.

Die Hintergriffsausnehmung (115) ist teilweise eine Bohrung (116). Sie hat einen Durchmesser von 3 mm und ist von der nächstgelegenen Stirnseite des Spannelements (101) z.B. 2,3 mm entfernt. Ihre Mittellinie ist parallel zur Mittellinie (9). Die Mittellinien der Bohrungen (116) liegen 3 mm entfernt von der Innenfläche (109). Zwischen der Bohrung (116) und der Stirnseite ist zur Ausbildung von zwei Hintergriffen (117) eine z.B. 2 mm breite Öffnung vorgesehen. Der jeweilige Klemmzapfen (122) des Elastomerkörpers (121) hat eine zur Hintergriffsausnehmung (115) komplementäre Geometrieform. Der Durchmesser des einzelnen Klemmzapfens (122) ist geringfügig größer als der der Bohrung (116), um nach der Montage die sechs Teile des Spannrings (100) sicher zusammenzuhalten.

Im Innenraum der Spannvorrichtung (10) sitzt der um z.B. 5,5 mm verschiebbare Ringkolben (40). Letzterer hat einen Außendurchmesser von 70 mm und eine Kolbenbreite von 21,5 mm. Der Ringkolben (40) hat eine zentrale Kolbenbohrung (51) mit einem minimalen Innendurchmesser von 33 mm. Die Ringkolbenfrontseite (41) ist passend zum Boden der Flanschplatte (13) im äußeren Bereich angefasst. Im planen Ringkolbenboden (45) befinden sich zwölf Federführungsbohrungen (46), die gegenüber den Sacklochbohrungen (34) des Gehäusedeckels (31) angeordnet sind. In der Außenwandung (47) des Ringkolbens (40) befinden sich zwei Dichtringnuten zur Aufnahme von Dichtringen.

Die Kolbenbohrung (51) ist in drei Bereiche aufgeteilt. Der vordere obere Bereich ist die obere Dichtzone (52), in der in einer Dichtringnut (53) ein Dichtring (54) angeordnet ist. Der Dichtring (54) liegt an der Außenwandung des Stützrohrs (16) an. Der hintere untere Bereich ist die untere Dichtzone (55), in der sich ebenfalls in einer Dichtringnut (56) ein Dichtring (57) befindet. Der untere Dichtring (57) kontaktiert die Außenwandung des Anschlagrohrs (32) des Gehäusedeckels (31). Alle Dichtringe sind beispielsweise Quadringe.

Im mittleren, zwischen den beiden Dichtzonen (52, 55) gelegenen Bereich der Kolbenbohrung (51) befindet sich eine Ringnut (61), die aus einem Arbeitsabschnitt (62) und einem Eintauchabschnitt (65) besteht. Der Arbeitsabschnitt (62) weist eine kegelstumpfmantelförmige Ringnutkeilfläche (63) auf, an der sich beim Spannen des Kombibolzens (130) der Spannring (100) in Radialrichtung abstützt. Die Ringnutkeilfläche (63) hat einen Kegelwinkel von 12 Winkelgraden. Sie erstreckt sich in der Ringnut (61) auf einer Länge von z.B. 4 mm.

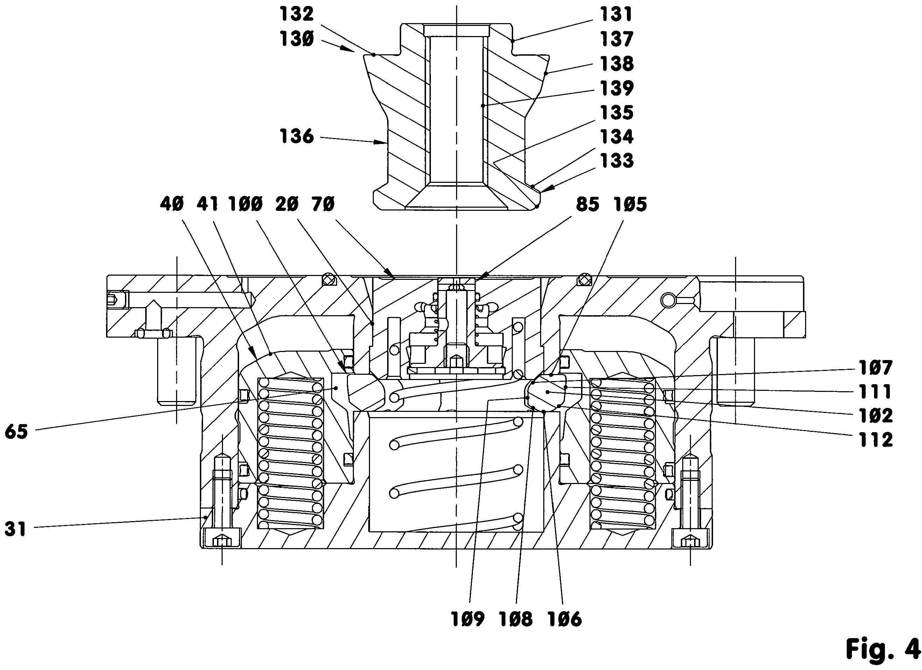

Nach Figur 4 schließt sich an ihrem oberen Ende der Eintauchabschnitt (65) an. Letzterer hat einen zylindrischen Nutgrund, dessen Nuttiefe z.B. 3,5 mm beträgt. Die untere kegelstumpfmantelförmige Flanke des Eintauchabschnitts bildet eine Rückhubfläche (66), deren Kegelwinkel 105 Winkelgrade misst. Der Eintauchabschnitt (65) nimmt den Spannring (100) komplett auf, wenn die Verschlusskappe (70) auf der Fahrt in die Verschlusskappenausnehmung (33) des Gehäusedeckels (31) den Spannring (100) - unter dessen Aufweitung - passiert. Der Übergang zwischen der Ringnutkeilfläche (63) und der Rückhubfläche (66) ist abgerundet.

Selbstverständlich kann die Außenwandung (47) des Ringkolbens (40) eine ovale, eine elliptische, eine polygonale oder eine vieleckige Kontur haben. Das gleiche gilt für die Kontur der Innenwandung (48).

Die Verschlusskappe (70) ist ein im Wesentlichen rotationssymmetrisches, kolbenartiges Bauteil, das bei nicht genutzter Spannvorrichtung (10) die Aufnahmeausnehmung (20) verschließt, vgl. Figuren 1 bis 4. Sie ist ebenfalls aus dem rostfreien Stahl X90CrMoV18 hergestellt. Ihre Stirnseite ist bis auf einen 0,9 mm breiten Rand um 0,3 mm eingezogen. Die Verschlusskappe (70) hat eine zylindrische Außenwandung, die im unteren Bereich einen Wellenbund (71) aufweist, mit dem sie in der Geschlossenstellung am Hintergriffsabsatz (23) der Aufnahmeausnehmung (20) anliegt. Zentral wird sie von einer Stufenbohrung (72) durchdrungen, die sich in mehreren Stufen zur vorderen Stirnseite hin verjüngt.

Nach Figur 4 ist der untere Bereich der Stufenbohrung (72) ein Zylinderbereich (73), der einen Durchmesser von 15 mm hat. In der Wandung des Zylinderbereichs (73) befinden sich eine Ringnut für einen Sicherungsring und mindestens zwei Überströmkerben (74). An den Zylinderbereich (73) schließt sich ein Luftverteilbereich (75) an, von dem aus sich z.B. acht Freiblasbohrungen (76) zur radialen Außenwandung der Verschlusskappe (70) erstrecken. Die Freiblasbohrungen (76) liegen alle in einer Ebene. Sie enden tangential im Luftverteilbereich (75), wobei ihre Mittellinien einen zur Mittellinie (9) zentrischen Kreis mit z.B. 10,4 mm Durchmesser tangieren. Durch diese Anordnung der Freiblasbohrungen (76) entsteht beim Freiblasen in dem sich nach oben aufweitenden Zentrierspalt (22) eine sich schraubenförmig windende Freiblasströmung. Auf den Luftverteilbereich (75) folgt eine Führungsbohrung (77), deren Durchmesser 6 mm misst.

Zwischen der Außenwandung der Verschlusskappe (70) und der Stufenbohrung (72) ist in der unteren Hälfte der Verschlusskappe (70) eine Federführungsringnut (81) eingearbeitet. In Letzterer sitzt eine z.B. fünf Windungen aufweisende Schließfeder (82) in Form einer Schraubendruckfeder, die sich am Boden der Verschlusskappenausnehmung (33) des Gehäusedeckels (31) abstützt.

Die untere Stirnfläche der Verschlusskappe (70) weist als Spreizfase (78) eine 1,4 x 45°-Fase nach DIN 406-11 auf. Das Führungsspiel der Verschlusskappe (70) in der Aufnahmeausnehmung (20) ist kleiner als 0,1 mm.

In der Stufenbohrung (72) sitzt, durch einen Sicherungsring axial gesichert, vgl. Figur 11, ein Reinigungskolben (85). Sein im Zylinderbereich (73) gelagerter Kolben ist mit seiner Kolbenstange (86) abgedichtet in der Führungsbohrung (77) geführt. Die Kolbenstange (86) hat eine Durchgangsbohrung (87), die im Kolbenbereich z.B. mittels eines Gewindestifts verschlossen ist. In der freien Stirnfläche der Kolbenstange (86) befindet sich eine axial ausblasende Düsenbohrung (89). Beispielsweise 1 mm unterhalb der freien Stirnfläche befinden sich z.B. acht weitere, jedoch radial ausblasende Düsenbohrungen (89), vgl. auch Figur 12. Im Luftverteilbereich (75) hat die Kolbenstange (86) mindestens eine Radialbohrung (88), über die die Durchgangsbohrungen (87) mit Druckluft versorgt werden.

In den Figuren 1 bis 4 ist jeweils oberhalb der Spannvorrichtung (10) der noch nicht in die Aufnahmeausnehmung (20) versenkte Kombibolzen (130) dargestellt. Er ist ebenfalls aus dem rostbeständigen Stahl X90CrMoV18 hergestellt und wie die Spannelemente (101) auf 56 + 3 HRC gehärtet. Der Kombibolzen (130) hat die Aufgabe, das Werkstück an der Spannvorrichtung (10) zu spannen und zugleich in dieser präzise zu zentrieren. Er ist ein z.B. 30 mm langes Drehteil, das eine zentrale Durchgangsbohrung (139) mit einem M10-Gewinde aufweist. Die Durchgangsbohrung (139) hat werkstückseitig eine 3 mm tiefe Passsenkung mit einem Durchmesser von z.B. 10,5 mm. An ihrem gegenüberliegenden Ende weist sie eine 90°-Senkung auf.

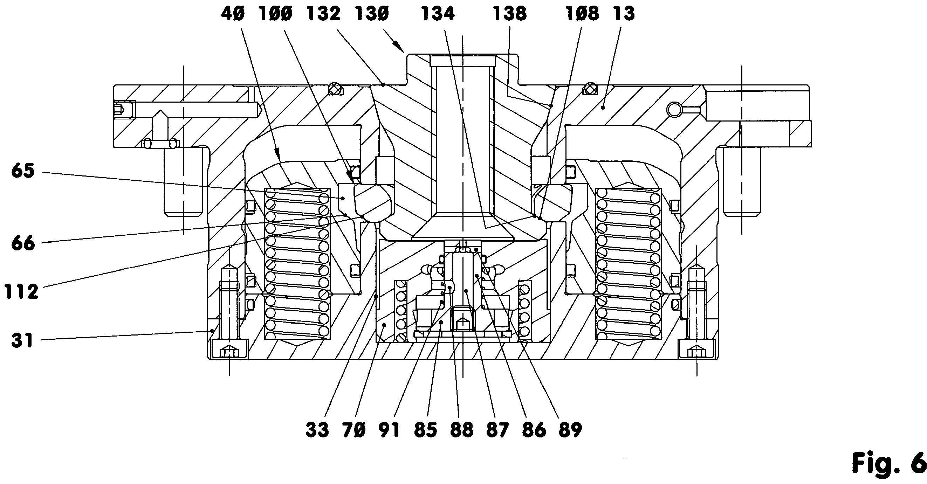

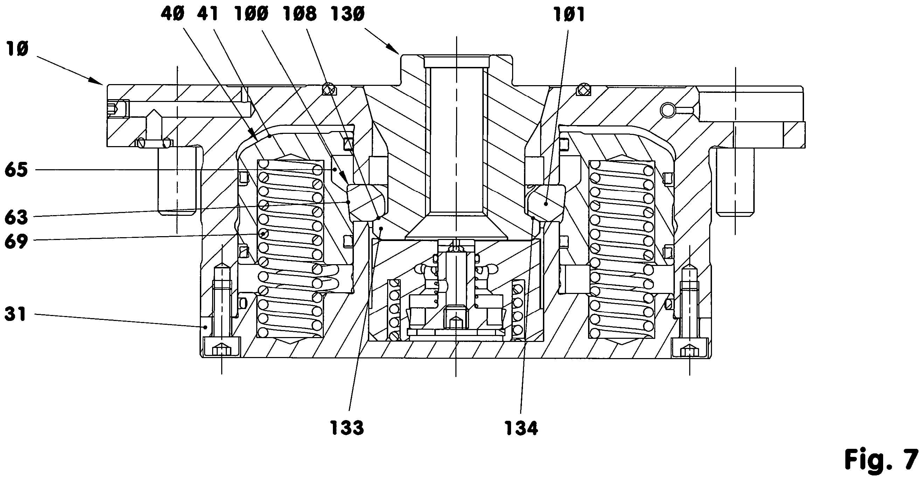

Am werkstückseitigen Ende ist der Kombibolzen (130) mit einem Passzylinderabschnitt (131) ausgestattet, dessen Durchmesser z.B. 18 mm und dessen Höhe z.B. 5 mm misst. Er endet in einer planen Axialanlagefläche (132). Der Teil des Kombibolzens (130), der nach den Figuren 6 und 7 vollständig in die Aufnahmeausnehmung (20) eintaucht, besteht im Wesentlichen aus drei Bereichen. Der vordere Bereich ist der Spannbereich (133) und der hintere Bereich ist der Zentrierbereich (137). Zwischen diesen beiden Bereichen liegt der Taillenbereich (136). Der Spannbereich (133), der in einem z.B. 1,5 mm breiten zylindrischen Abschnitt einen Durchmesser von z.B. 26,8 mm hat, dient beim Spannen des Werkstücks u.a. als Hintergriff, der am Spannring (100) zur Anlage kommt. Er hat dazu eine kegelstumpfmantelförmige Innenspannfläche (134), mit der er im gespannten Zustand großflächig an der Hüllspannfläche (108) des Spannrings (100) anliegt. Die wirksame Flankenlänge der Innenspannfläche (134) beträgt unter Berücksichtigung der Ab- und Ausrundungen mindestens 2,4 mm.

Zwischen dem zylindrischen Abschnitt und der vorderen Stirnseite des Spannbereichs (133) befindet sich eine Spannringrückhubfase (135), deren Kegelwinkel 90 Winkelgrade beträgt. Sie erleichtert beim Einfahren des Kombibolzens (130) in die Aufnahmeausnehmung (20) das Passieren des aufgedehnten Spannrings (100).

Der Zentrierbereich (137) des Kombibolzens (130) hat eine der Innenspannfläche (134) zugewandte feinbearbeitete Außenspannfläche (138), die zur Zentrierung an der Zentrierspannfläche (21) der Aufnahmeausnehmung (20) - nach den Figuren 6 und 7 - großflächig anliegt. Die wirksame Flankenlänge beträgt unter Berücksichtigung der Ab- und Ausrundungen mindestens 5,4 mm. Der maximale Durchmesser der Außenspannfläche (138) misst z.B. 29,8 mm.

Der Taillenbereich (136) hat einen Durchmesser von z.B. 22 mm. In diesem Bereich befinden sich zwei gegenüberliegende Abflachungen, vgl. Figur 1, um zwei Angriffsflächen für einen Maulschlüssel mit der Schlüsselweite 20 zu haben.

Nach Figur 2 befindet sich die Spannvorrichtung (10) drucklos in ihrem unbetätigten Ausgangszustand. Die Verschlusskappe (70) sitzt in ihrer Schließposition. Zugleich liegt der Ringkolben (40) aufgrund der Wirkung der Schraubendruckfedern (69) am Boden des Zylinders (27) an. Dabei kontaktiert der Spannring (100) die Ringnutkeilfläche (63) des Ringkolbens (40). Der Spannring (100) ragt ca. zur Hälfte in die Aufnahmeausnehmung (20) hinein. Vor der Aufschiebekeilfläche (107) liegt die Verschlusskappe (70) mit ihrer Spreizfase (78) in einem Abstand von ca. 0,1 mm, womit ein Öffnen der Verschlusskappe (70) formschlüssig verhindert wird. Der Reinigungskolben (85) befindet sich in der Verschlusskappe (70) in seiner eingefahrenen Position.

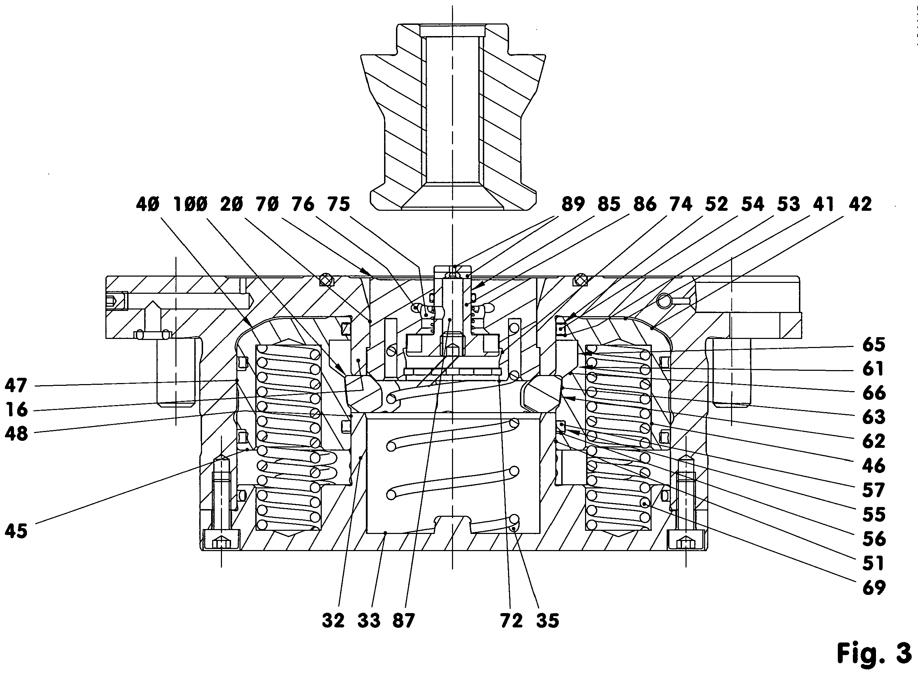

Gemäß Figur 3 steht an dem rückwärtigen Kolbenboden (45) des Ringkolbens (40) der pneumatische Solldruck an. Zugleich gelangt Druckluft über die Querbohrung (35) in die Aufnahmeausnehmung (20). Dort wirkt sie in der Verschlusskappe (70) auf den Reinigungskolben (85), wodurch dieser in der Stufenbohrung (72) nach oben gepresst wird. Dabei strömt über die Überströmkerben (74) die Druckluft über den Luftverteilbereich (75) in die Freiblasbohrungen (76) und über die Durchgangsbohrung (87) der Kolbenstange (86) in die ausgefahrenen Düsenbohrungen (89) zum Freiblasen der Stirnseite der Verschlusskappe (70). Der Spannring (100) und der Ringkolben (40) dichten hierbei den zwischen dem Stützrohr (16) und dem Anschlagrohr (32) liegenden Spalt ab.

Nach Figur 4 liegt an der Ringkolbenfrontseite (41) Druckluft an, um so den Ringkolben (40) unter einem Spannen der Schraubendruckfedern (69) auf dem Gehäusedeckel (31) aufsitzen zu lassen, wodurch der Eintauchabschnitt (65) auf die Höhe des Spannrings (100) gelangt. Des Weiteren wird die Druckluftversorgung der Aufnahmeausnehmung (20) unterbrochen. Der Reinigungskolben (85) fährt - unterstützt von seiner Schließfeder (91) - in die Verschlusskappe (70) wieder ein. Die Aufnahmeausnehmung (20) ist für ein Eintauchen des Kombibolzens (130) vorbereitet.

Gemäß Figur 5 ist der Kombibolzen (130) schon großteils in die Aufnahmeausnehmung (20) unter einem Voranschieben der Verschlusskappe (70) gegen die Wirkung der Schließfeder (82) eingetaucht. Der Spannbereich (133) des Kombibolzens (130) drückt dabei - unter einer Dehnung der Elastomerkörper (121) des Spannrings (100) - den Spannring (100) in den Eintauchabschnitt (65) des Ringkolbens (40). Das Dehnen der Elastomerkörper (121) hat kurz zuvor auch die Verschlusskappe (70) bewirkt.

Nach Figur 6 ist der Kombibolzen (130) mit seiner Außenspannfläche (138) an der Zentrierspannfläche (21) der Flanschplatte (13) vollflächig zur Anlage gekommen. Die axiale Anlagefläche (132) des Kombibolzens (130) liegt nun in der Ebene, in der die dem Werkstück zugewandten Kontaktstellen der Oberseite der Flanschplatte (13) liegen. Der Spannring (100) hat sich in seine Ausgangslage zusammengezogen, womit er zum einen den Eintauchabschnitt (65) des Ringkolbens (40) großteils verlassen hat und zum anderen mit seiner Hüllspannfläche (108) an der Innenspannfläche (134) des Kolbenbolzens (130) anliegt. Die Verschlusskappe (70) steht in geringem Abstand, z.B. 0,1 mm, vor dem Boden der Verschlusskappenausnehmung (33) des Gehäusedeckels (31).

Gemäß Figur 7 wird nach einem Entlüften des vor der Ringkolbenfrontseite (41) gelegenen Zylinderraums der Ringkolben (40) aufgrund der Wirkung der Schraubendruckfedern (69) - nur ggf. mit Druckluftunterstützung - nach oben gedrückt, wodurch die Ringnutkeilfläche (63) hinter den Spannring (100) gelangt, um zum endgültigen Fixieren des Kombibolzens (130) in der Spannvorrichtung (10) dessen Spannelemente (101) gegen die Innenspannfläche (134) des Spannbereichs (133) des Kombibolzens (130) zu pressen. Eine auf den Kombibolzen (130) wirkende Zugkraft wird über den Spannbereich (133) in den Spannring (100) eingeleitet, um von dort über die plane Spannfläche (105) in die Stirnfläche des Anschlagrohrs (32) und somit ins Gehäuse (11) übertragen zu werden.

Hat sich der Spannring (100) noch nicht vollständig an der Innenspannfläche (134) des Spannbereichs (133) des Kombibolzens (130) angelegt, vgl. Figur 6, so werden die noch in den Eintauchabschnitt (65) ragenden Teile (101, 121) mithilfe der kegelstumpfmantelförmigen Rückhubfläche (66) durch Anlage an der Spannringrückhubfläche (112) des Spannrings (100) gegen den Kombibolzen (130) geschoben.

Die Messabweichung von Spannvorgang zu Spannvorgang ist kleiner als 5 um. Die Einzugskraft liegt hierbei im Bereich von 18 kN.

Das Lösen des Kombibolzens (130) erfolgt im Wesentlichen in umgekehrter Reihenfolge. Der Ringkolben (40) wird mit Druckluft gegen den Gehäusedeckel (31) gepresst, wodurch der Spannring (100) beim Herausziehen des Kolbenbolzens (130) in den Eintauchabschnitt (65) des Ringkolbens (40) verdrängt wird. Die kegelstumpfmantelförmige Hüllspannfläche (108) des Kombibolzens (130) erleichtert diesen Vorgang.

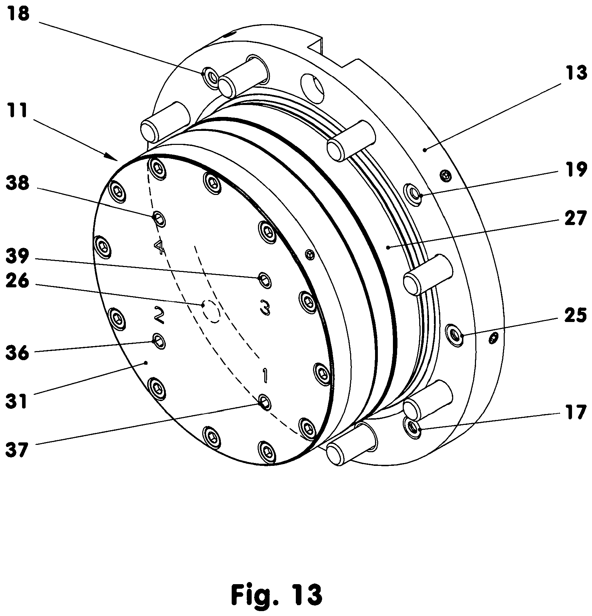

Die Figur 13 zeigt die Rückseite der Spannvorrichtung (10). Die Druckluft kann bei diesem Spannsystem (1) in zwei verschiedenen Gehäusebereichen in die Spannvorrichtung (10) eingeleitet werden. Der übliche Gehäusebereich ist die Unterseite des Gehäusedeckels (31), an der z.B. vier Anschlüsse für Druckluftschläuche vorgesehen sind. An der Unterseite befindet sich im Bereich der Nummerierung "1" ein Entriegelungsdruckluftanschluss (37). Über diesen Anschluss wird die Druckluft im Gehäuse (11) vor die Ringkolbenfrontseite (41) gefördert. Im Bereich der Nummerierung "3" ein Sperrluftanschluss (39). Über ihn gelangt beispielsweise radial durch den Ringkolben (40) hindurch die Druckluft in den Eintauchabschnitt (65), um von dort entlang dem Spannring (100) zwischen dem Stützrohr (16) und dem Anschlagrohr (32) in die Aufnahmeausnehmung (20) einzuströmen. Neben der Nummerierung "2" befindet sich ein Spanndruckluftanschluss (36), über den der Ringkolbenboden (45) mit Druckluft beaufschlagt werden kann, um die Spannbewegung des Ringkolbens (40) zu unterstützen. Der Ausblasanschluss (38) wird nur verwendet, wenn die Spannvorrichtung (10) nicht mit einer Verschlusskappe (70) ausgestattet ist. Dann wird vom Boden der Verschlusskappenausnehmung (33) aus Druckluft in Richtung der Aufnahmeausnehmung (20) geblasen, um dort sich befindende Schmutzpartikel ins Freie zu fördern.

Zum schlauchlosen Anschluss der Druckluft sind auf der Rückseite des Flansches bzw. der Flanschplatte (13) fünf Anschlüsse (17, 18, 19, 26, 25) vorgesehen. Diese Anschlüsse werden aus Bohrungen versorgt, die sich im Träger der Spannvorrichtung (10) befinden. Die Anschlüsse sind der Entriegelungsdruckluftanschluss (17), der Ausblasanschluss (18), der Sperrluftanschluss (19), der Spanndruckluftanschluss (26) und ein Auflagenkontrollanschluss (25), vgl. hierzu Figur 2.

### Bezugszeichenliste:

- 1: Spannsystem
- 9: Mittellinie

- 10: Spannvorrichtung, Baugruppe
- 11: Gehäuse
- 12: Gehäusegrundkörper, Gehäuseteil
- 13: Flanschplatte, Flansch
- 14: Positionierlanglöcher
- 15: Befestigungsschrauben
- 16: Stützrohr
- 17: Entriegelungsdruckluftanschluss an (13)
- 18: Ausblasanschluss an (13)
- 19: Sperrluftanschluss an (13)

- 20: Aufnahmeausnehmung
- 21: Zentrierspannfläche, kegelstumpfmantelförmig
- 22: Zentrierspalt
- 23: Hintergriffsabsatz
- 24: Kanalsystem
- 25: Auflagenkontrollanschluss an (13)
- 26: Spanndruckluftanschluss an (13), optional
- 27: Zylinder
- 28: Entlüftungsnut
- 29: Axialringnut

- 31: Gehäusedeckel, Gehäuseteil
- 32: Anschlagrohr
- 33: Verschlusskappenausnehmung
- 34: Sacklochbohrungen
- 35: Querbohrung
- 36: Spanndruckluftanschluss an (31), optional
- 37: Entriegelungsdruckluftanschluss an (31)
- 38: Ausblasanschluss an (31)
- 39: Sperrluftanschluss an (31)

- 40: Ringkolben
- 41: Ringkolbenfrontseite, oben
- 42: Kolbenfase, Fase
- 45: Ringkolbenboden, Kolbenboden
- 46: Federführungsbohrungen
- 47: Außenwandung
- 48: Innenwandung

- 51: Kolbenbohrung, zentral
- 52: Dichtzone, oben, Teil der Kolbeninnenabdichtung
- 53: Dichtringnut, oben, Teil der Kolbeninnenabdichtung
- 54: Dichtring, oben, Teil der Kolbeninnenabdichtung
- 55: Dichtzone, unten, Teil der Kolbeninnenabdichtung
- 56: Dichtringnut, unten, Teil der Kolbeninnenabdichtung
- 57: Dichtring, unten, Teil der Kolbeninnenabdichtung

- 61: Ringnut, Arbeitsringnut
- 62: Arbeitsabschnitt
- 63: Ringnutkeilfläche, kegelstumpfmantelförmig, Keilgetriebeteil
- 65: Eintauchabschnitt
- 66: Rückhubfläche, kegelstumpfmantelförmig

- 69: Schraubendruckfedern, Rückholfedern, Federelemente

- 70: Verschlusskappe
- 71: Wellenbund
- 72: Stufenbohrung
- 73: Zylinderbereich
- 74: Überströmkerben
- 75: Luftverteilbereich
- 76: Freiblasbohrungen
- 77: Führungsbohrung
- 78: Spreizfase
- 81: Federführungsringnut
- 82: Schließfeder, Schraubendruckfeder

- 85: Reinigungskolben
- 86: Kolbenstange
- 87: Durchgangsbohrung
- 88: Radialbohrung
- 89: Düsenbohrung
- 91: Schließfeder, Schraubendruckfeder

- 100: Spannring
- 101: Spannelemente, segmentartig
- 102: Einzelquerschnitt
- 105: Spannfläche, oben, plan
- 106: Aufliegefläche, unten, plan
- 107: Aufschiebekeilfläche, oben, innen
- 108: Hüllspannfläche, unten, innen
- 109: Innenfläche, zylindrisch
- 111: Spannringkeilfläche, Keilgetriebeteil
- 112: Spannringrückhubfläche
- 115: Hintergriffsausnehmung
- 116: Bohrung
- 117: Hintergriffe
- 121: Federelemente, Elastomerkörper, segmentartig
- 122: Klemmzapfen

- 130: Kombibolzen, Baugruppe
- 131: Passzylinderabschnitt
- 132: Axialanlagefläche, Anlagefläche
- 133: Spannbereich
- 134: Innenspannfläche, Spannfläche
- 135: Spannringrückhubfase
- 136: Taillenbereich
- 137: Zentrierbereich
- 138: Außenspannfläche, Spannfläche
- 139: Durchgangsbohrung

## Patentansprüche

1. Spannsystem aus einer Spannvorrichtung (10) und einem Kombibolzen (130),
- wobei die Spannvorrichtung (10) im Gehäuse (11) mindestens einen Ringkolben (40) und mindestens drei Spannelemente (101) lagert und zudem eine automatisch verschließbare Aufnahmeausnehmung (20) zur temporären Aufnahme des Kombibolzens (130) aufweist,
- wobei der Kombibolzen (130) zwei kegelstumpfmantelförmige Spannflächen (134, 138) aufweist, deren Oberflächen einander zugeneigt sind,
- wobei das Gehäuse (11) einen am Gehäusegrundkörper (12) anliegenden Gehäusedeckel (31) aufweist,
**dadurch gekennzeichnet,**
**dass** der Gehäusegrundkörper (12) des Gehäuses (11) und die Spannelemente (101) jeweils eine kegelstumpfmantelförmige Zentrierspann- oder Hüllspannfläche (21, 108) aufweisen, deren Oberflächen voneinander abgewandt sind,
- **dass** am Gehäusegrundkörper (12) ein Stützrohr (16) und am Gehäusedeckel (31) ein Anschlagrohr (32) angeformt ist,
- **dass** die Spannelemente (101) als Teile eines Spannringes (100) in Axialrichtung zwischen der Stirnfläche des Stützrohres (16) und der Stirnfläche des Anschlagrohres (32) radial zustellbar angeordnet sind und
- **dass** der Ringkolben (40) - für die Verschiebbarkeit der Spannelemente (101) - eine kegelstumpfmantelförmige Ringnutkeilfläche (63) aufweist, die räumlich zwischen der oberen (52-54) und unteren Kolbeninnenabdichtung (55-56) liegt.

2. Spannsystem gemäß dem Anspruch 1, **dadurch gekennzeichnet, dass** der in einem Zylinder (27) der Spannvorrichtung (10) sitzende Ringkolben (40 )bereichsweise eine zylindrische Außenwandung (47) und bereichsweise eine zylindrische Innenwandung (48) aufweist.

3. Spannsystem gemäß dem Anspruch 2, **dadurch gekennzeichnet, dass** die Innenwandung (48) des Ringkolbens (40) zwischen einer oberen und unteren - jeweils einen Dichtring (54, 57) lagernden - Dichtzone (52, 55) eine aus mindestens zwei Bereichen bestehende Ringnut (61) aufweist, deren - in Axialrichtung gesehen - unterer Bereich als Nutgrund die kegelstumpfmantelförmige Ringnutkeilfläche (63) hat, während der obere Bereich ein Eintauchabschnitt (65) ist.

4. Spannsystem gemäß dem Anspruch 1, **dadurch gekennzeichnet, dass** in der Spannvorrichtung (10) zwischen je zwei benachbarten Spannelementen (101) ein Federelement (121) angeordnet ist.

5. Spannsystem gemäß dem Anspruch 4, **dadurch gekennzeichnet, dass** die Spannelemente (101) mit den Federelementen (121) formschlüssig und verliersicher auf Zug, Druck und Biegung belastbar gekuppelt sind.

6. Spannsystem gemäß dem Anspruch 5, **dadurch gekennzeichnet, dass** die Federelemente (121) Elastomerkörper sind, deren jeweiliger Querschnitt mit dem eines Spannelementes (101) übereinstimmt.

7. Spannsystem gemäß dem Anspruch 1, **dadurch gekennzeichnet, dass** der Ringkolben (40) Teil eines einfachwirkenden Zylinders ist, für dessen klemmende Rückbewegung der Ringkolben (40) federbelastet ist.

8. Spannsystem gemäß der Ansprüche 1 und 2, **dadurch gekennzeichnet, dass** der Gehäusegrundkörper (12) im Bereich der Grundkörperoberseite einen Flansch (13) aufweist, der radial über den Zylinder (27) übersteht.

9. Spannsystem gemäß dem Anspruch 8, **dadurch gekennzeichnet, dass** die Spannvorrichtung (10) für das getrennte Zuführen von Entriegelungsdruckluft, Ausblasdruckluft, Spanndruckluft und Sperrluft sowohl auf der Rückseite des Flansches (13) als auch auf der Unterseite des Gehäuses (11) entsprechende Anschlüsse (17, 18, 19, 26) und (36-39) aufweist.

## Claims

1. A tensioning system consisting of a tensioning device (10) and a combination bolt (130),
- wherein the tensioning device (10) mounts at least one annular piston (40) and at least three tensioning elements (101) in the housing (11), and also comprises an automatically closable receiving recess (20) for temporarily receiving the combination bolt (130),
- wherein the combination bolt (130) has two tensioning faces (134, 138) in the shape of the conical surface of a truncatedcone, the surfaces of which are inclined towards one another,
- wherein the housing (11) comprises a housing cover (31) lying on the housing main body (12),
**characterised in that**
the housing main body (12) of the housing (11) and the tensioning elements (101) each have a centring tensioning face or a shell tensioning face (21, 108) in the shape of the conical surface of a truncated cone, the surfaces of which face away from one another,
- that a support tube (16) is integrally moulded on the housing main body (12) and a stop tube (32) is integrally moulded on the housing cover (31),
- that the tensioning elements (101), as parts of a tensioning ring (100), are arranged radially advanceable in the axial direction between the end face of the support tube (16) and the end face of the stop tube (32) and
- that the annular piston (40) comprises - for the displaceability of the tensioning elements (101) - an annular groove wedge face (63) in the shape of the conical surface of a truncated cone, which lies spatially between the upper (52-54) and lower piston inner seal (55-56).

2. The tensioning system according to claim 1, **characterised in that** the annular piston (40) sitting in a cylinder (27) of the tensioning device (10) comprises a cylindrical outer wall (47) in sections and a cylindrical inner wall (48) in sections.

3. The tensioning system according to claim 2, **characterised in that** the inner wall (48) of the annular piston (40) comprises between an upper and lower sealing zone (52, 55), each of which mounts a sealing ring (54, 57), an annular groove (61) consisting of at least two regions, the lower region whereof - viewed in the axial direction - has, as the groove base, the annular groove wedge face (63) in the shape of the conical surface of a truncated cone, whilst the upper region is an immersion section (65).

4. The tensioning system according to claim 1, **characterised in that** a spring element (121) is arranged in the tensioning device (10) between each two adjacent tensioning elements (101).

5. The tensioning system according to claim 4, **characterised in that** the tensioning elements (101) are coupled with the spring elements (121) in a form-fitting and captive manner for traction, compression and bending.

6. The tensioning system according to claim 5, **characterised in that** the spring elements (121) are elastomer bodies, the cross-section of each of which coincides with that of a tensioning element (101).

7. The tensioning system according to claim 1, **characterised in that** the annular piston (40) is part of a single-acting cylinder, for the clamping return movement of which the annular piston (40) is springloaded.

8. The tensioning system according to claims 1 and 2, **characterised in that** the housing main body (12), in the region of the main body upper side, comprises a flange (13) which projects radially beyond the cylinder (27) .

9. The tensioning system according to claim 8, **characterised in that**, for the separate feeding of unlocking compressed air, blow-out compressed air, tensioning compressed air and sealing air, the tensioning device (10) comprises corresponding connections (17, 18, 19, 26) and (36-39) both on the rear side of the flange (13) and also on the underside of the housing (11).

## Revendications

1. Système de serrage composé d'un dispositif de serrage (10) et d'un boulon combiné (130),
- sachant que le dispositif de serrage (10) loge dans le boîtier (11) au moins un piston annulaire (40) et au moins trois éléments de serrage (101) et comporte en plus un évidement de logement à fermeture automatique (20) pour le logement temporaire du boulon combiné (130),
- sachant que le boulon combiné (130) comporte deux surfaces de serrage (134, 138) en forme d'enveloppe tronconique, dont les surfaces sont inclinées l'une vers l'autre,
- sachant que le boîtier (11) comporte un couvercle de boîtier (31) adjacent au corps de base de boîtier (12),
**caractérisé en ce que**
le corps de base de boîtier (12) du boîtier (11) et les éléments de serrage (101) comportent respectivement une surface de serrage de centrage ou de serrage d'enveloppe en forme d'enveloppe tronconique (21, 108), dont les surfaces sont éloignées l'une de l'autre,
- **en ce qu**'un tube de support (16) est conformé sur le corps de base de boîtier (12) et un tube de butée (32) est conformé sur le couvercle de boîtier (31),
- **en ce que** les éléments de serrage (101) sont disposés en tant que pièces d'une bague de serrage (100) radialement réglable en direction axiale entre la surface avant du tube de support (16) et la surface avant du tube de butée (32), et
- **en ce que** le piston annulaire (40) comporte, pour la possibilité de déplacement des éléments de serrage (101), une surface cunéiforme de rainure annulaire en forme d'enveloppe tronconique, qui se situe dans l'espace entre l'étanchéification intérieure de piston supérieure (52-54) et inférieure (55-56).

2. Système de serrage selon la revendication 1, **caractérisé en ce que** le piston annulaire (40) siégeant dans un vérin (27) du dispositif de serrage (10) comporte par endroits une paroi extérieure cylindrique (47) et par endroits une paroi intérieure cylindrique (48) .

3. Système de serrage selon la revendication 2, **caractérisé en ce que** la paroi intérieure (48) du piston annulaire (40) comporte une rainure annulaire (61) composée d'au moins deux zones entre une zone étanche (52, 55) supérieure et inférieure logeant respectivement une bague d'étanchéité (54, 57), dont la zone inférieure, vue en direction axiale, possède en tant que base de rainure la surface cunéiforme de rainure annulaire (63) en forme d'enveloppe tronconique, alors que la zone supérieure est une section plongeante (65).

4. Système de serrage selon la revendication 1, **caractérisé en ce qu**'un élément de ressort (121) est disposé dans le dispositif de serrage (10) entre respectivement deux éléments de serrage (101) voisins.

5. Système de serrage selon la revendication 4, **caractérisé en ce que** les éléments de serrage (101) sont couplés pouvant être sollicités par conformité de forme et de façon imperdable à la traction, la pression et la flexion aux éléments de ressort (121).

6. Système de serrage selon la revendication 5, **caractérisé en ce que** les éléments de ressort (121) sont des corps d'élastomère, dont la section respective coïncide avec celle d'un élément de serrage (101).

7. Système de serrage selon la revendication 1, **caractérisé en ce que** le piston annulaire (40) fait partie d'un vérin à simple effet pour le mouvement de recul bloquant duquel, le piston annulaire (40) est sollicité par ressort.

8. Système de serrage selon les revendications 1 et 2, **caractérisé en ce que** le corps de base du boîtier (12) comporte une bride (13) dans la zone de la face supérieure du corps de base, qui dépasse radialement au-dessus du vérin (27).

9. Système de serrage selon la revendication 8, **caractérisé en ce que** le dispositif de serrage (10) comporte des raccords (17, 18, 19, 26) et (36-39) correspondants pour l'acheminement séparé de l'air comprimé de déverrouillage, de l'air comprimé de chasse par soufflage, de l'air comprimé de serrage et de l'air de blocage tant sur l'arrière de la bride (13) que sur la face inférieure du boîtier (11).
